# EUROPÄISCHE PATENTSCHRIFT

(11) **EP 2 644 914 B1**
(45) Veröffentlichungstag und Bekanntmachung des Hinweises auf die Patenterteilung: **04.11.2015**
(21) Anmeldenummer: 13000297.5
(22) Anmeldetag: 21.01.2013
(51) Int. Cl.: F16B 45/02

(54) **Karabinervorrichtung**
Karabiner
Dispositif de mousqueton

(30) Priorität: 28.03.2012 DE 202012003169 U
(43) Veröffentlichungstag der Anmeldung: 02.10.2013
(73) Patentinhaber: Skylotec GmbH, 56567 Neuwied (DE)
(72) Erfinder: Schwingshackl, Ulrich, 39057 Eppan a.d. Weinstrasse (IT); Jungmann, Lukas, 9900 Lienz (AT); Almberger, Günter, 83101 Rohrdorf (DE)
(74) Vertreter: Zeitler Volpert Kandlbinder Patent- und Rechtsanwälte Partnerschaft mbB

(56) Entgegenhaltungen:
- EP-A1- 0 109 163
- WO-A1-95/19505
- DE-C- 19 979
- DE-C- 660 202
- FR-A1- 2 461 146
- FR-A1- 2 668 560
- FR-A1- 2 747 161
- US-A1- 2003 106 190
- US-A1- 2004 143 945

## Beschreibung

Die Erfindung betrifft einen Karabiner mit einem eine Öffnung ausbildenden Grundkörper und einem Verschlusselement für die Öffnung, wobei das Verschlusselement an einem Ende verschwenkbar mit dem Grundkörper verbunden ist und an dem anderen Ende mittels einer Verriegelungseinrichtung mit dem Grundkörper verriegelbar ist, wobei die Verriegelungseinrichtiung ein Betätigungselement umfasst, dass zum Entriegeln drückend betätigt wird.

Ein solcher gattungsgemäßer Karabiner ist beispielsweise aus der EP 2 397 708 A1 bekannt. Dort umfasst die Verriegelungseinrichtung zwei in jeweils einer nutförmigen Vertiefung der Außenseite des Verschlusselements angeordnete, wippend gelagerte Verriegelungshebel, die in ihrer Verriegelungsstellung mit einem (Verriegelungs-)Ende in jeweils eine Ausnehmung des Grundkörpers eingreifen und dadurch das Verschlusselement an dem Grundkörper verriegeln; das Verschlusselement kann dann nicht in den von dem Grundkörper ausgebildeten Innenbereich verschwenkt werden. Ein Öffnen des Karabiners ist somit nicht möglich. Dabei sind die Verriegelungshebel mittels einer Feder in ihre Verriegelungsstellung belastet. Zum Entriegeln des Verschlusselements bzw. zum Öffnen des Karabiners ist es erforderlich, die beiden wippend gelagerten Verriegelungshebel an dem dem Verriegelungsende gegenüberliegenden Ende drückend zu betätigen, wodurch die Verriegelungsenden aus den Ausnehmungen des Grundkörpers herausgeschwenkt werden.

Nachteilig an dem aus der EP 2 397 708 A1 bekannten Karabiner ist, dass zum Entriegelng des Verschlusselements die beiden Verriegelungselemente gleichzeitig drückend betätigt werden müssen. Hinzu kommt, dass die Verriegelungsenden der Verriegelungshebel bei der Betätigung über den Umfang des Verschlusselements hinaus schwenken, was nicht immer möglich ist, beispielsweise wenn der Karabiner seitlich an einem Objekt anliegt. Und schließlich ist die Verriegelungseinrichtung der EP 2 397 708 A1 in Folge der zur Umgebung hin offenen Ausgestaltung relativ schmutzanfällig, wobei ein Eindringen von Schmutz in die der Aufnahme der Verriegelungshebel dienenden Vertiefungen des Verschlusselements zu einer Beeinträchtigung der Funktionsfähigkeit der Verriegelugnseinrichtung führen kann.

Die Druckschriften US2004/0143945 A1 und FR 2 747 161 und FR 79 18523 offenbaren jeweils einen Karabiner, der mithilfe einer Verriegelungseinrichtung derart verriegelbar ist, dass eine Verschwenkung des Verschlusselements des Karabiners nicht mehr möglich ist. Die Verriegelungseinrichtung ist an demselben Ende des Verschlusselements angeordnet wie das Gelenk zum Verschwenken des Verschlusselements.

Die Druckschrift DE 660 202 C offenbart einen Karabiner mit nach außen verschwenkbarem Verschlusselement.

Die Druckschrift FR 2 668 560 A1 beschreibt einen Karabiner, bei dem innerhalb des Verschlusselements eine Stahlstange zum Verriegeln des Karabiners angeordnet ist.

Ausgehend von diesem Stand der Technik lag der Erfindung die Aufgabe zugrunde, einen verbesserten Karabiner anzugeben, der sich insbesondere durch eine hohe Verriegelungssicherheit, eine komfortabele Bedienbarkeit und/oder durch eine geringe Schmutzanfälligkeit auszeichnet.

Diese Aufgabe wird durch einen Karabiner gemäß dem unabhängigen Anspruch 1 gelöst. Vorteilhafte Ausgestaltungen des erfindungsgemäßen Karabiners sind Gegenstand der abhängigen Ansprüche und ergeben sich aus der nachfolgenden Beschreibung der Erfindung.

Der Erfindung liegt der Gedanke zugrunde, durch die Anordnung eines von dem Betätigungselement betätigten (und von diesem vorzugsweise strukturell getrennten) Verriegelungselements innerhalb des Verschlusselements die Schmutzanfälligkeit der Verriegelungseinrichtung zu reduzieren. Gleichzeitig kann dadurch verhindert werden, dass beim Entriegeln Teile der Verriegelungseinrichtung den Umfang des Verschlusselements überragen. Zudem ist vorzugsweise vorgesehen, dass die Verriegelungseinrichtung durch das drückende Betätigen von lediglich einem Betätigungselement zu entriegeln ist.

Demnach ist vorgesehen, einen gattungsgemäßen Karabiner mit einem eine Öffnung ausbildenden Grundkörper und einem Verschlusselement für die Öffnung, bei dem das Verschlusselement an einem Ende verschwenkbar mit dem Grundkörper verbunden ist und an dem anderen Ende mittels einer Verriegelungseinrichtung mit dem Grundkörper verriegelbar ist, wobei die Verriegelungseinrichtung ein Betätigungselement umfasst, dass zum Entriegeln drückend betätigt wird, dadurch erfindungsgemäß weiterzubilden, dass das Betätigungselement ein innerhalb des Verschlusselements angeordnetes Verriegelungselement betätigt, das sich dadurch aus einer Verriegelung mit dem Profilelement löst.

Als "Verriegelung" wird dabei ein direktes oder indirektes, kraft- oder formschlüssiges Zusammenwirken des Verriegelungselement mit dem Grundkörper verstanden, wodurch - infolge der Integration der Verriegelungseinrichtung in das Verschlusselement (wobei auch eine Integration der Verriegelugngseinrichtung in den Grundkörper möglich ist) - das Verschlusselement mit dem Grundkörper verbunden und dadurch nicht zu diesem verschwenkbar ist.

Vorzugsweise kann vorgesehen sein, dass das Betätigungselement in Form eines verschiebbar in einer Aufnahmeöffnung des Verschlusselements gelagterten Druckknopfs ausgebildet ist. Besonders bevorzugt erstreckt sich die Aufnahmeöffnung zur Aufnahme des Druckknopfs radial oder zumindest quer bezüglich einer Längsachse des Verschlusselements. Der Druckknopf ragt somit von einem das Verriegelungselement aufnehmenden Innenraum des Verschlusselements durch die Aufnahmeöffnung nach außen, wo dieser insbesondere manuell betätigt werden kann.

Dabei kann besonders bevorzugt vorgesehen sein, dass der Druckknopf in einer Vertiefung des Verschlusselements angeordnet ist bzw. aus dieser Vertiefung hervorragt. Dadurch wird eine Bedienbarkeit des Druckknopfs auch dann ermöglicht, wenn dieser so dimensioniert ist, dass dieser die Außenseite des Verschlusselements in dem die Vertiefung umgehenden Bereich nicht überragt. Durch diese "versenkte" Anordnung des Druckknopfs kann das Risiko einer ungewollten Betätigung, beispielsweise durch ein in dem Innenbereich des Karabiners geführtes Seil, vermindert werden.

Zur konstruktiv einfachen Ausgestaltung weist das Verriegelungselement des erfindungsgemäßen karabiners eine Blattfeder auf, die zum Entriegeln mittels des Betätigungselements elastisch ausgelenkt wird. Dabei greift die Blattfeder in ihrer Verriegelungsstellung (d.h. wenn das Betätigungselement nicht betätigt ist) in eine Ausnehmung des Grundkörpers ein, um formschlüssig mit dem Grundkörper zusammenzuwirken. Die Blattfeder weist dabei eine Doppelfunktion auf, sie dient nämlich zum einen als Verriegelungselement und zum anderen bewirkt sie eine selbständige Rückstellung in ihre Verriegelungsstellung , sobald das Betätigungselement nicht mehr betätigt wird.

Ein Auslenken der Blattfeder kann vorzugsweise dadurch erreicht werden, dass diese beim Betätigen des Betätigungselements an einer schräg bezüglich der Bewegungsrichtung des Betätigungselements angeordneten Kontaktfläche des Betätigungselements gleitet. Dadurch kann eine konstruktiv einfache und gleichzeitig funktionssichere Ausgestaltung der Verriegelungseinrichtung realisiert werden.

Insbesondere zur Erhöhung der Verriegelungssicherheit kann weiterhin vorgesehen sein, dass das Verriegelungselement mindestens (und vorzugsweise genau) zwei Blattfedern umfasst, die besonders bevorzugt jeweils in eine Ausnehmung des Grundkörpers eingreifen, wenn das Betätigungselement nicht betätigt ist.

Eine konstruktiv einfache Ausgestaltung des erfindungsgemäßen Karabiners kann dabei vorsehen, dass die zwei Blattfedern in Form eines U-förmigen Blattfederelements ausgebildet sind. Ein Auslenken beider Blattfederelemente bei der Betätigungs des Betätigungselements kann dann vorzugsweise durch ein Gleiten an entsprechenden schrägen Kontaktflächen des Betätigungselements erfolgen, wobei das Betätigungselement vorzugsweise zwischen den beiden Blattfedern des U-förmigen Blattfederelements geführt ist.

Eine zusätzliche Möglichkeit zur Ausgestaltung des Verriegelungselements kann vorsehen, dass das Verriegelungselement ein Federelement und einen Verriegelungsstift umfasst, wobei durch eine Betätigung des Betätigungselement eine Vorspannung des Federelements erhöht und gleichzeitig der Verriegelungsstift aus einer Bohrung des Grundkörpers heraus bewegt wird. Bei dieser Ausgestaltung wird somit die Funktion der Verriegelung und die Funktion der elastischen Belastung des Verriegelugnsstifts in die Verriegelungsstellung von zwei unterschliedlichen Elementen bewirkt. Dabei ist besonders bevorzugt vorgesehen, dass das Betätigungselement auf das Federelement wirkt, das wiederum den Verriegelungsstift betätigt. Das Federelement kann vorzugsweise in Form einer Blattfeder ausgebildet sein.

Der Begriff "Bohrung" ist erfindungsgemäß nicht als auf ein bestimmtes Herstellungsverfahren ("Bohren") beschränkt anzusehen.

Die Bohrung kann vorzusgweise in einer der die Öffnung begrenzenden Strinflächen des Grundkörpers angeordnet sein, wodurch eine asymmetrische Belastung der Verriegelungseinrichtung trotz der Verwendung lediglich eines Verriegelungselements vermieden werden kann.

Die Verriegelungseinrichtung des erfindungsgemäßen Karabiners kann selbstverständlich eine Mehrzahl von - auch unterschiedlich ausgestalteten - Verriegelungselementen umfassen.

In einer weiterhin bevorzugten Ausgestaltung des erfindungsgemäßen Karabiners kann (mindestens) eine Hülse vorgesehen sein, die auf dem Verschlusselement von einer ersten, das Betätigungselement verdeckenden Position in eine zweite, das Betätigungselement freigebende bzw. nicht verdeckende Position verschiebbar ist. Eine solche Hülse kann als zusätzliche Sicherungseinrichtung dienen, die eine ungewollte Betätigung des Betätigungselements und dadurch ein gegebenenfalls ungewolltes Öffnen des Karabiners vermeiden kann. Dabei ist bevorzugt vorgesehen, dass die Hülse im nichtbetätigten bzw. nicht beaufschlagten Zustand in der ersten Position angeordnet ist bzw. sich selbsttätig in die erste Position bewegt. Dies kann beispielsweise durch eine entsprechende Beaufschlagung mit einem Federelement erreicht werden.

Die Erfindung wird nachfolgend anhand eines in den Zeichnungen dargestellten Ausführungsbeispiels näher erläutert. In den Zeichnungen zeigt:
- Fig. 1:: einen erfindungsgemäßen Karabiner in einer isometrischen Ansicht;
- Fig. 2:: einen Abschnitt des Karabiners gemäß der Fig. 1 in einer Vorderansicht;
- Fig. 3:: Bestandteile der Verriegelungseinrichtung des Karabiners gemäß den Fig. 1 und 2 in einer isometrischen Darstellung; und
- Fig. 4:: eine teilweise transparente Darstellung des die Verriegelungseinrichtung umfassenden Abschnitts des Karabiners gemäß den Fig. 1 und 2.

Der in den Zeichnungen dargestellte Karabiner umfasst einen Grundkörper 1 in Form eines gebogenen Profilelements, dessen zwei freie Enden, sich in einem Abstand gegenüberliegend, eine (Karabiner-)Öffnung ausbilden. Diese Öffnung ist mittels eines Verschlusselements 2 verschließbar, das in Form eines kurzen, geraden (gebogen ebenfalls möglich) Profilelements ausgebildet ist. Das Verschlusselement 2 ist an einem seiner Enden mittels eines Bolzens 3 verschwenkbar mit dem einen Ende des Grundkörpers 1 verbunden.

An dem anderen Ende weist das Verschlusselement 2 eine sich quer zu dessen Längsachse erstreckende, T-förmige Öffnung 4 auf, in die das ebenfalls T-förmig ausgebildete Ende des Grundkörpers 1 eingreift, sofern sich das Verschlusselement in der in den Zeichnungen dargstellten Verschlussstellung befindet. Die T-förmige Öffnung 4 des Verschlusselements 2 erstreckt sich nicht über dessen gesamte Breite, wodurch ein Anschlag ausgebildet wird, der ein Verschwenken des Verschlusselements 2 über die Verschlussstellung hinaus (in Richtung aus einem Innenbereich des Grundkörpers 1 heraus) verhindert. Wie bei Karabinern üblich, kann das Verschlusselement 2 somit lediglich in den Innenbereich des Grundkörpers 1 verschwenkt werden, um den Karabiner zu öffnen.

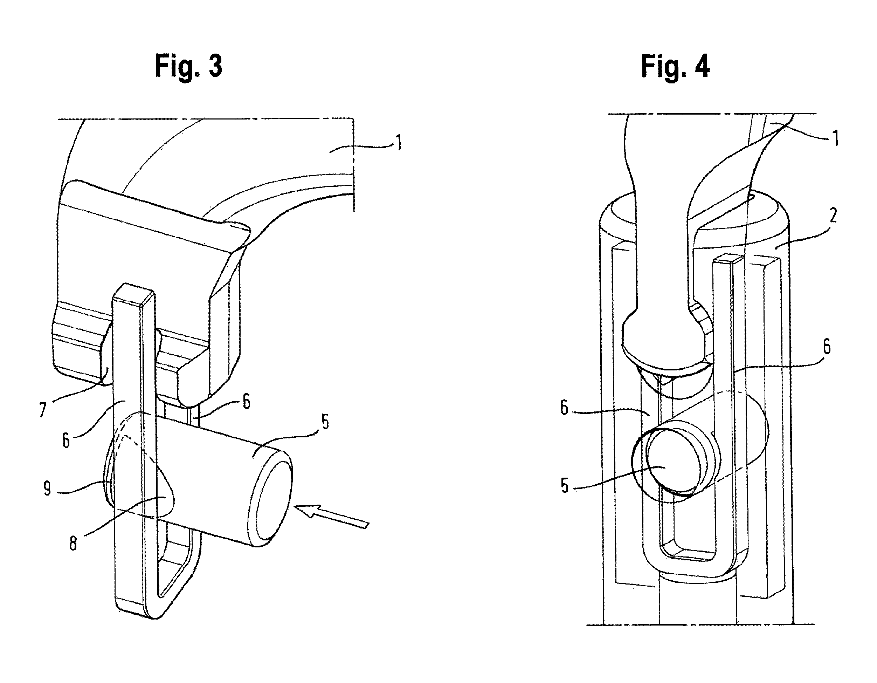

Der Karabiner umfasst weiterhin eine Verriegelungseinrichtung, die ein unbeabsichtigtes Lösen des Verschlusselements 2 aus dessen Verschlussstellung vermeidet. Diese Verriegelungseinrichtung ist so ausgestaltet, dass diese manuell entriegelt werden muss, um ein Verschwenken des Verschlusselements 2 mit dem Ziel des Öffnens des Karabiners zu erreichen. Dieses Entriegeln erfolgt mittels eines als Druckknopf 5 ausgebildeten Betätigungselements, das in einer sich quer zur Längsachse des Verschlusselements 2 erstreckenden, in den Innenbereich des Grundkörpers 1 mündenden Aufnahmeöffnung des Verschlusselements verschiebbar gelagert ist und das bei einer drückenden Betätigung, d.h. wenn der Druckknopf in Richtung auf die Längsachse des Verschlusselements 2 zu verschoben wird (vgl. Pfeil in Fig. 3), ein Verriegelungselement betätigt, das dadurch aus einer Verriegelungsstellung, in der dieses formschlüssig mit dem Grundkörper 1 zusammenwirkt, ausgelenkt wird.

Das Verriegelungselement ist in Form eines U-förmigen Blattfederelements ausgeführt, dessen zwei Schenkel jeweils eine Blattfeder 6 ausbilden. Die freien Enden dieser beiden Blattfedern 6 greifen in der Verriegelungsstellung in jeweils eine nutförmige Ausnehmung 7 ein, die in dem einen freien Ende des Grundkörpers 1 ausgebildet sind. Das formschlüssige Zusammenwirken der Blattfedern 6 mit dem Grundkörper 1 verhindert ein ungewolltes Verschwenken des Verschlusselements 2 und folglich ein ungewolltes Öffnen des Karabiners.

Um die Verriegelungseinrichtung zu entriegeln, wird der Druckknopf 5 drückend betätigt, beispielsiwese mit dem Daumen einer Hand, wodurch dieser relativ zu den beiden Blattfedern 6 des Verriegelungsselements verschoben wird. Dabei gleiten die Blattfedern 6 jeweils auf einer schräg bezüglich der Bewegungsrichtung des Druckknopfs 5 angeordneten Kontaktfläche 8 ab. Dies führt zu einem seitlich Auslenken der Blattfedern 6, wodurch diese aus den Ausnehmungen 7 des Grundkörpers 1 heraus bewegt werden.

Durch das Auslenken der Blattfedern 6 werden diese vorgespannt bzw. eine bereits vorhandene Vorspannung wird erhöht, so dass bei einem Entlasten des Druckknopfs 5 die Blattfedern 6 selbsttätig in ihre Verriegelungsstellung zurückkehren. Durch die Führung des Druckknopfs 5 zwischen den beiden Blattfedern 6 wird dabei auch gleichzeitig der Druckknopf 5 in seine (unbelastete) Neutralstellung zurückgeführt.

In der Neutralstellung des Druckknopfs 5 liegen die beiden Blattfedern 6 in jeweils einer Vertiefung des Druckknopfs an diesem an. Diese Vertiefungen werden auf der einen Seite von der jeweiligen Schrägfläche 8 und auf der anderen Seite von jeweils einem Vorsprung 9 begrenzt. Diese Vorsprünge 9 vermeiden eine Bewegung des Druckknopfs 5 nach außen über die Neutralstellung hinaus und verhindern so einen Verlust des Druckknopfs 5.

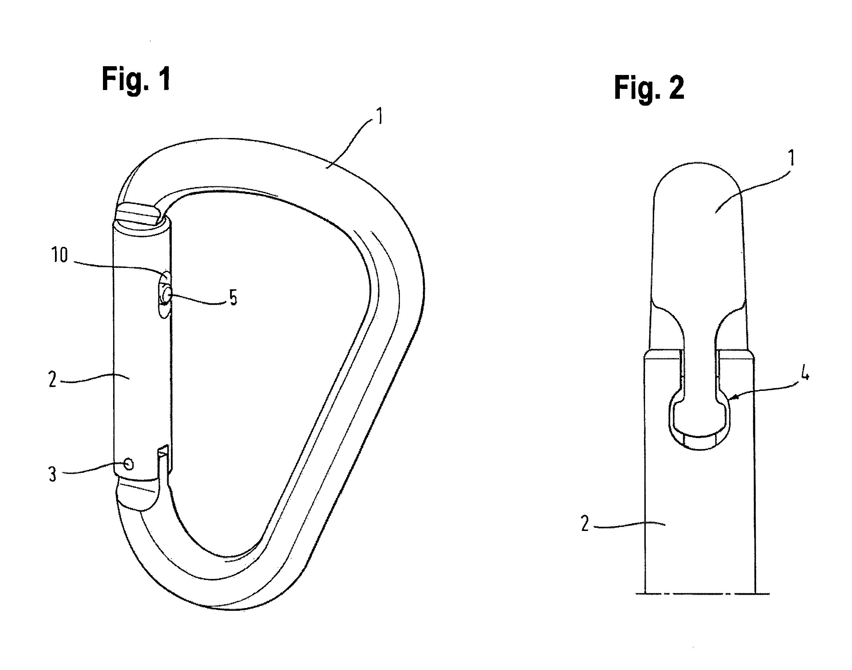

Wie sich aus der Fig. 1 ergibt, ist der Druckknopf 5 in einer Vertiefung 10 des Verschlusselements 2 angeordnet. Dies ermöglicht, den Druckknopf 5 zu betätigen, obwohl dieser - auch in seiner Neutralstellung - nicht über den Umfang des Verschlusselements 2 in dem die Vertiefung 10 umgehenden Bereich hinausragt. Diese Anordnung des Druckknopfs 5 hilft, eine ungewollte Betätigung, beispielsweise mittels eines in dem Innenbereich des Grundkörpers 1 geführten Seils, zu vermeiden.

Die Zeichnungen zeigen, dass beispielsweise die hier gewählte, bevorzugte Ausgestaltung der Verriegelungseinrichtung so klein ausgeführt sein kann, dass diese trotz der erfindungsgemäßen Anordnung innnerhalb des Verschlusselements 2 nicht zu Abmessungen (insbesondere Durchmesser) des Verschlusselements 2 führen muss, die größer sind als die entsprechenden Abmessungen des Grundkörpers 1.

## Patentansprüche

1. Karabiner mit einem eine Öffnung ausbildenden Grundkörper (1) und einem Verschlusselement (2) für die Öffnung, wobei das Verschlusselement (2) an einem Ende verschwenkbar mit dem Grundkörper (1) verbunden ist und an dem anderen Ende mittels einer Verriegelungseinrichtung mit dem Grundkörper (1) verriegelbar ist, wobei die Verriegelungseinrichtung ein innerhalb des Verschlusselements angeordnetes Verriegelungselement und ein Betätigungselement umfasst, das zum Entriegeln drückend betätigt wird, wobei das Betätigungselement das Verriegelungselement betätigt, das sich dadurch aus einer Verriegelung mit dem Grundkörper löst, **dadurch gekennzeichnet, dass** das Verriegelungselement eine Blattfeder (6) umfasst, die mittels des Betätigungselement zum Entriegeln elastisch ausgelenkt wird, und die zum anderen eine selbständige Rückstellung in die Verriegelungsstellung bewirkt, sobald das Betätigungselement nicht mehr betätigt wird, wobei die Blattfeder (6) in der Verriegelungsstellung zum Verriegeln in eine Ausnehmung (7) des Grundkörpers (1) eingreift.

2. Karabiner gemäß Anspruch 1, **dadurch gekennzeichnet, dass** das Betätigungselement in Form eines verschiebbar in einer Aufnahmeöffnung des Verschlusselements (2) gelagerten Druckknopfs (5) ausgebildet ist.

3. Karabiner gemäß Anspruch 2, **dadurch gekennzeichnet, dass** der Druckknopf (5) in einer Vertiefung (10) des Verschlusselements (2) angeordnet ist.

4. Karabiner gemäß einem der vorhergehenden Ansprüche, **dadurch gekennzeichnet, dass** ein Auslenken durch ein Gleiten der Blattfeder (6) an einer schräg bezüglich der Bewegungsrichtung des Betätigungselements angeordneten Kontaktfläche (8) des Betätigungselements erfolgt.

5. Karabiner gemäß einem der vorhergehenden Ansprüche, **dadurch gekennzeichnet, dass** das Verriegelungselement mindestens zwei Blattfedern (6) umfasst.

6. Karabiner gemäß Anspruch 5, **dadurch gekennzeichnet, dass** die zwei Blattfedern (6) in Form eines U-förmigen Blattfederelements ausgebildet sind.

7. Karabiner gemäß einem der vorhergehenden Ansprüche, **dadurch gekennzeichnet, dass** das Verriegelungselement ein Federelement und einen Verriegelungsstift umfasst, wobei durch eine Betätigung des Betätigungselements eine Vorspannung des Federelements erhöht und gleichzeitig der Verriegelungsstift aus einer Bohrung des Grundkörpers (1) herausbewegt wird.

8. Karabiner gemäß Anspruch 7, **dadurch gekennzeichnet, dass** die Bohrung in einer die Öffnung begrenzenden Stirnfläche des Grundkörpers (1) angeordnet ist.

9. Karabiner gemäß einem der vorhergehenden Ansprüche, **gekennzeichnet durch** eine Hülse, die auf dem Verschlusselement (2) von einer ersten, das Betätigungselement verdeckenden Position in eine zweite, das Betätigungselement freigebende Position verschiebbar ist.

## Claims

1. Karabiner having a basic body (1) forming an opening, and a closing element (2) for the opening, wherein the closing element (2) is pivotably connected at one end to the basic body (1) and at the other end is lockable to the basic body (1) by means of a locking device, wherein the locking device comprises a locking element arranged within the closing element and an actuating element which is actuated by pressing for unlocking, wherein the actuating element actuates the locking element which is thereby released from locking with the basic body, **characterised in that** the locking element comprises a leaf spring (6) which is elastically deflected for unlocking by means of the actuating element and which also brings about automatic resetting into the locking setting as soon as the actuating element is no longer actuated, wherein in the locking position, the leaf spring (6) engages for locking in a recess (7) of the basic body (1).

2. Karabiner according to claim 1, **characterised in that** the actuating element is configured in the form of a push button (5) displaceably mounted in a receptacle opening of the closing element (2).

3. Karabiner according to claim 2, **characterised in that** the push button (5) is arranged in a depression (10) of the closing element (2).

4. Karabiner according to one of the preceding claims, **characterised in that** a deflection is carried out by sliding the leaf spring (6) on a contact surface (8) of the actuating element, said contact surface being arranged inclined relative to the movement direction of the actuating element.

5. Karabiner according to one of the preceding claims, **characterised in that** the locking element comprises at least two leaf springs (6).

6. Karabiner according to claim 5, **characterised in that** the two leaf springs (6) are configured in the form of a U-shaped leaf spring element.

7. Karabiner according to one of the preceding claims, **characterised in that** the locking element comprises a spring element and a locking pin, wherein by means of an actuation of the actuating element, a pre-tension of the spring element is increased and the locking pin is simultaneously moved out of a bore of the basic body (1).

8. Karabiner according to claim 7, **characterised in that** the bore is arranged in an end face of the basic body (1) adjacent the opening.

9. Karabiner according to one of the preceding claims, **characterised by** a sleeve which is displaceable on the closing element (2) from a first position covering the actuating element into a second position freeing the actuating element.

## Revendications

1. Mousqueton comprenant un corps de base (1) formant une ouverture, et un élément de fermeture (2) pour l'ouverture, dans lequel l'élément de fermeture (2) est relié à une extrémité avec le corps de base (1) de manière à pouvoir pivoter, et est susceptible d'être verrouillé à l'autre extrémité avec le corps de base (1) au moyen d'un système de verrouillage, dans lequel ledit système de verrouillage inclut un élément de verrouillage agencé à l'intérieur de l'élément de fermeture et un élément d'actionnement qui est actionné par poussée pour le déverrouillage, dans lequel l'élément d'actionnement actionne l'élément de verrouillage qui se libère de ce fait hors d'une position de verrouillage avec le corps de base,
**caractérisé en ce que** l'élément de verrouillage inclut un ressort à lame (6) qui est dévié élastiquement au moyen de l'élément d'actionnement pour le déverrouillage et qui provoque d'autre part un rappel automatique jusque dans la position de verrouillage dès que l'élément d'actionnement n'est plus actionné, et dans lequel, dans la position de verrouillage, le ressort à lame (6) s'engage pour le verrouillage dans un évidement (7) du corps de base (1).

2. Mousqueton selon la revendication 1, **caractérisé en ce que** l'élément d'actionnement est réalisé sous la forme d'un bouton-poussoir (5) monté en déplacement dans une ouverture de réception de l'élément de de fermeture (2).

3. Mousqueton selon la revendication 2, **caractérisé en ce que** le bouton-poussoir (5) est agencé dans un renfoncement (10) de l'élément de fermeture (2).

4. Mousqueton selon l'une des revendications précédentes, **caractérisé en ce qu'**il se produit une déflexion par coulissement du ressort à lame (6) sur une surface de contact (8), agencée en oblique par rapport à la direction de déplacement de l'élément d'actionnement, de l'élément d'actionnement.

5. Mousqueton selon l'une des revendications précédentes, **caractérisé en ce que** l'élément de verrouillage inclut au moins deux ressorts à lame (6).

6. Mousqueton selon la revendication 5, **caractérisé en ce que** les deux ressorts à lame (6) sont réalisés sous la forme d'un élément de ressort à lame en forme de U.

7. Mousqueton selon l'une des revendications précédentes, **caractérisé en ce que** l'élément de verrouillage inclut un élément de ressort et une tige de verrouillage, dans lequel par un actionnement de l'élément d'actionnement une précontrainte de l'élément de ressort est augmentée et simultanément la tige de verrouillage est déplacée hors d'un perçage du corps de base (1).

8. Mousqueton selon la revendication 7, **caractérisé en ce que** le perçage est agencé dans une surface frontale du corps de base (1) qui délimite l'ouverture.

9. Mousqueton selon l'une des revendications précédentes, **caractérisé par** un fourreau, qui est déplaçable sur l'élément de fermeture (2) depuis une première position qui recouvre l'élément d'actionnement jusque dans une seconde position qui dégage l'élément d'actionnement.
